# EUROPEAN PATENT APPLICATION

(11) **EP 3 590 901 A1**
(43) Date of publication of application: **08.01.2020**
(21) Application number: 17898870.5
(22) Date of filing: 10.08.2017
(51) Int. Cl.: C03C 3/083

(54) **GLASS FOR PROTECTING CAPACITIVE TOUCH SYSTEM**

(30) Priority: 03.03.2017 CN 201710123882
(71) Applicant: Sichuan Xuhong Optoelectronic Technology Co., Ltd., Mianyang, Sichuan 621000 (CN); Tunghsu Group Co., Ltd., Hebei 050000 (CN); Tunghsu Technology Group Co., Ltd., Beijing 100070 (CN)
(72) Inventor: GONG, Ruhua, Shijiazhuang Hebei 050000 (CN); LI, Qing, Shijiazhuang Hebei 050000 (CN); ZHAN, Guixin, Shijiazhuang Hebei 050000 (CN); HE, Gen, Shijiazhuang Hebei 050000 (CN); LI, Shengyin, Shijiazhuang Hebei 050000 (CN)
(74) Representative: Lavoix
(86) International application number: PCT/CN2017/096878
(87) International publication number: WO 2018/157555

(57) **Abstract**

This invention relates to a protective glass for a capacitive touch control system having a dielectric constant of 8.0-9.8 at room temperature and at an operating frequency of 1 kHz; and aanother protective glass for a capacitive touch control system, comprising a compressive stress layer of a certain depth formed on the surface of the glass through chemical strengthening treatment. High dielectric constant and high strength glass may be provided, which is applicable to protective glass for a capacitive touch control system and may have high light transmittance and create a good user experience of touch control.

## Description

### TECHNICAL FIELD

The present invention relates to protective glass for a touch control system, in particular to protective glass for a capacitive touch control system.

### BACKGROUND ART

With the evolution of technology, there is an increasingly strong demand for simple man-machine operation interfaces. In particular, with the rapid development of portable display devices, the application of touch control systems is popularized. Among them, capacitive touch control systems have become the mainstream technology due to their advantages of rapid response speed, high light transmittance, and good strength. In particular, projected mutual-capacitance touch control systems can truly achieve multi-touch and are therefore applied and generalized widely. Moreover, resistive touch control systems in earlier stages are gradually eliminated by. the industry.

The structure of the projected mutual-capacitance touch control system is usually divided into 4 layers, which are a protective layer, a transparent electrode, an anti-interference layer, and a transparent electrode from the outside to the inside, successively.
1) The protective layer is mainly used for circuit protection and is usually a glass of high light transmittance.
2) The transparent electrode is two sensing layers and mainly made of transparent conductive materials, such as vacuum-deposited Indium-Tin-Oxide (ITO), of which one layer is used for determining the position in the X direction, and the other layer is used for determining the position in the Y direction; with the two sensing layers, two coordinates are obtained for a circuit; and then, a touch point is determined on a two-dimensional plane.
3) The anti-interference layer: since a liquid crystal display screen often generates noise during operation, an anti-interference layer is added between the liquid crystal display screen and the sensing layers, which is usually made of a glass or film material.

As described above, there is an insulating material between an X electrode and a Y electrode. Therefore, a capacitance C₀ would be formed at an intersection of the two directions, that is, the two groups of electrodes constitute two poles of the capacitor respectively.

When a user touches the screen, due to the electric field of human body, a coupled capacitance C₁ is formed between the user and the surface of the touch screen. For high-frequency current, a capacitor is a direct conductor, and therefore, so the finger draws a very small current I₁ away from the contact point. This affects the coupling between the two electrodes near the touch point, thereby changing the capacitance between the two electrodes, so that a capacitance C₀' is obtained. Therefore, the amount of change in capacitance Δ C (namely, C₀ - C₀') of the touch control system before and after touching is a triggering signal for the touch control system to calculate coordinate of a touch control point. In addition, the strength of the triggering signal Δ C affects the sensitivity of the touch control system, that is, if Δ C is small, the triggering signal will be weak, and if Δ C is large, the triggering signal will be strong.

When a mutual capacitance is detected, the electrodes in the X direction emit excitation signals, and all electrodes in the Y direction receive the signals simultaneously. In this way, a capacitance C of intersections of all electrodes in the X direction and in the Y direction may be obtained, which is the capacitance of the whole touch control system in the two-dimensional plane, thereby obtaining the position coordinates of the touch control point.

For the current touch control system, since the value of Δ C is smaller, the sensitivity of the touch control system is poor. Therefore, the sensitivity of the touch control system needs to be further improved.

### SUMMARY OF THE INVENTION

The object of the present application is to further reduce C₀' and increase Δ C appropriately, that is, to enhance the triggering signal, thereby improving the sensitivity of a touch control system. The above object of the present application is achieved by the following embodiments:
A protective glass for a capacitive touch control system according to the present application, having a dielectric constant of 8.0-9.8, preferably 8.0-9.0, at room temperature and at an operating frequency of 1 kHz.

Another protective glass for a capacitive touch control system according to the present application, comprising a compressive stress layer of a certain depth formed on the surface of the glass through chemical strengthening treatment.

The protective glass for a capacitive touch control system according to the above embodiments, wherein through first chemical strengthening treatment, the surface of the glass may obtain a compressive stress of 300-1100MPa, preferably 600-1100MPa, more preferably 650-1100MPa, and a depth of the compressive stress layer of 10-60µm, preferably 15-50µm, more preferably 20-45µm; and
through second or more chemical strengthening treatments, the surface of the glass may obtain a superposed compressive stress of 300-1100MPa, preferably 650-1100MPa, and a depth of the compressive stress layer of 10-90µm, preferably 20-80µm.

The protective glass for a capacitive touch control system according to the above embodiments, wherein the first chemical strengthening treatment is performed at the temperature of 380-500°C for 2-10 hours.

The protective glass for a capacitive touch control system according to the above embodiments, wherein the second chemical strengthening is performed at the temperature of 380-450°C for 10-100 minutes.

The protective glass for a capacitive touch control system according to the above embodiments, with the chemical composition represented in molar percentage, comprising:
SiO₂: 60-65%
Al₂O₃: 6-13%
Na₂O: 10-16%
K₂O: 1.5-6.0%
MgO: 6-11%
ZrO₂: 0-2.0%
Li₂O: 0-2.5%
ZnO: 0-2.5%.

The protective glass for a capacitive touch control system according to the above embodiments, wherein the surface waviness is 0.10-0.50µm, and is capable for physical thinning and/or chemical thinning or a combination thereof.

The protective glass for a capacitive touch control system according to the above embodiments, wherein after physical thinning, the surface waviness is 0.05-0.50 µm; after chemical thinning, the surface waviness is 0.10-0.80 µm, and there is a certain difference in surface waviness in the vertical direction.

The protective glass for a capacitive touch control system according to the above embodiments, wherein the light transmittance may reach above 90% in the visible light wavelength range of 380-780 nm.

The protective glass for a capacitive touch control system according to the above embodiments, wherein the thickness of the glass is in the range of 0.2mm-2.0mm.

According to the present invention, glass of a high dielectric constant and high strength may be provided, which is particularly applicable to protective glass for a capacitive touch control system and may have high light transmittance and create a good user experience of touch control.

### DETAILED DESCRIPTION OF EMBODIMENTS

The present invention will be described in further details in conjunction with embodiments below. However, the embodiments of the present invention are not limited thereto.

The present invention provides a protective glass for a capacitive touch control system. The glass has a dielectric constant between 8.0-9.8, preferably between 8.0-9.0, when tested at a frequency of 1 kHz and at room temperature. The glass may obtain greater amount of change in capacitance Δ C compared with conventional glass with a dielectric constant below 8.0, thereby enhancing the triggering signal and improving the sensitivity of the touch control system. When the dielectric constant of the glass is less than 8.0, the strength of the triggering signal may be reduced, thereby affecting the sensitivity of touch control; when the dielectric constant is greater than 9.8, touch control interference may be generated and the precision may be reduced; and if the dielectric constant is much larger, certain interference may be generated to a communication signal.

The technical problem of the present application is solved by taking the dielectric constant of an intermediate-medium glass as the optimal choice, with a specific analyzing and reasoning process as follows:
When the touch control system is touched by a finger, a capacitance C₁ may be generated. The capacitance, in structure, is composed of an electrode of the touch control system on one end, a finger on the other end, and protective glass for an intermediate dielectric (in one or more layers).

If C₁ increases, the capability of storing charge is enhanced, and at the same time, the effect of current guiding is enhanced (I₁ becomes larger), that is, C₀' may be further decreased, thereby increasing Δ C (namely, C₀ - C₀'). Factors affecting C₁ are in the following three aspects:
1) The finger contact area S, directly proportional to C₁;
2) The dielectric constant ε for protective glass for an intermediate medium, directly proportional to C₁; and
3) The distance d between the two electrodes, inversely proportional to C₁.

It can be seen from the above that the contact area S cannot be controlled effectively, and if the distance d between the two electrodes is decreased, certain negative effects may occur, that is, the protective action of the glass may be weakened, and the like. Therefore, it is the optimal choice to achieve the increasing of C₁ by increasing the dielectric constant of the intermediate dielectric glass.

In addition, the performance of shock resistance and bending resistance of the glass may be improved significantly by chemical strengthening. Chemical strengthening is achieved by ion exchange of an original glass sheet in a molten-state nitrate solution (KNO₃/NaNO₃), wherein ions (K⁺/Na⁺) with relatively larger ionic radius in the nitrate solution may be exchanged with ions (Na⁺/Li⁺) with relatively smaller ionic radius on the surface of the original glass sheet, thus forming a compressive stress layer on the surface of the original glass sheet. By adjusting the temperature and soaking time of the nitrate solution, the magnitude and depth of the compressive stress are controlled, thereby enhancing the strength of the original glass sheet. However, if the surface compressive stress and the depth thereof increase, the internal tensile stress may increase; if the internal tensile stress is too large, the glass will have the risk of "spontaneous explosion"; and if the surface compressive stress and the depth thereof are too small, the performance of strengthening cannot be improved significantly.

Here, the present invention provides a protective glass for a capacitive touch control system. Through first chemical strengthening treatment, the surface of the glass may be provided with a compressive stress of 300-1100 MPa, preferably 600-1100 MPa, more preferably 650-1100 MPa, and the depth of a compressive stress layer may be 10-60 µm, preferably 15-50 µm, more preferably 20-45 µm; and through second or more chemical strengthening treatments, the surface of the glass may be provided with a superposed compressive stress of 300-1100 MPa, preferably 650-1100 MPa, and the depth of the compressive stress layer may be 10-90 µm, preferably 20-80 µm. Conditions for the twice chemical strengthening treatments are as follows: the first chemical strengthening treatment is performed at the temperature of generally 380-500°C for generally 2-10 hours; and the second chemical strengthening treatment is performed at the temperature of generally 380-450°C for generally 10-100 minutes. Therefore, the strength performance of the glass, for example, the performance of shock resistance and bending resistance, is guaranteed.

Furthermore, the protective glass for a capacitive touch control system according to the present invention has a surface waviness of 0.10-0.50 µm, and the glass may be capable of being thinned. After physical thinning, the surface waviness of the glass is 0.05-0.50 µm; after chemical thinning, the surface waviness is 0.10-0.80 µm; and there is a certain difference in surface waviness in the vertical direction. Therefore, there is a good user experience of touch control between fingers and the touch control system.

Furthermore, protective glass for a capacitive touch control system according to the present invention, wherein the light transmittance may reach above 90% in the range of visible light (the wavelength is 380-780 nm) so as to ensure the optimal effect of display.

Protective glass for a capacitive touch control system according to the present invention, with the chemical composition represented in molar percentage, comprises:
SiO₂: 60-65%
Al₂O₃: 6-13%
Na₂O: 10-16%
K₂O: 1.5-6.0%
MgO: 6-11%
ZrO₂: 0-2.0%
Li₂O: 0-2.5%
ZnO: 0-2.5%.

The content of alkali metal R₂O (Li, Na, K) in ingredients of the glass has a direct impact on the dielectric constant and the effect of chemical strengthening (namely, the surface compressive stress and the depth formed). When the alkali metal content is in the range of 11.5-24.5 mol%, the dielectric constant tends to become larger as the content of alkali metal increase, while the surface compressive stress obtained by strengthening may also tend to become larger.

With respect to protective glass for a capacitive touch control system according to the present invention, the embodiments of components (represented in molar percentage) of the glass are illustrated as follows:
SiO₂ is a network forming oxide, glass-constituting framework, belongs to an essential ingredient, and has the effect of reducing the dielectric constant. When the content of SiO₂ is less than 60%, the stability and hardness of the glass are low or the weather resistance is poor, so the content is preferably above 60%. When the content of SiO₂ exceeds 65%, the viscosity of the glass increases and the meltbility decreases, so the content is preferably below 65%.

Al₂O₃ is a network intermediate oxide, can improve the speed of ion exchange during chemical strengthening as well as the intrinsic strength of the glass, and belongs to an essential ingredient. When the content of Al₂O₃ is less than 6%, the speed of ion exchange is low, so the content is preferably above 6%. When the content of Al₂O₃ exceeds 13%, the viscosity of the glass increases significantly and homogeneous melting is difficult to achieve, so the content is preferably below 13%.

Na₂O is a network modifier oxide, belongs to an essential ingredient for ion exchange in a process of chemical strengthening, and at the same time, can improve the meltbility of the glass and has the effect of improving the dielectric constant of the glass. When the content of Na₂O is less than 8%, the required surface compressive stress layer is difficult to be formed by ion exchange, so the content is preferably above 8%, more preferably above 10%. When the content of Na₂O exceeds 16%, the thermal performance of the glass reduces significantly and the weather resistance becomes lower, so the content is preferably below 16%.

K₂O is a network modifier oxide, can improve the speed of ion exchange, increase the transparency and luster of the glass, improve the meltbility of the glass, has the effect of improving the dielectric constant of the glass, and belongs to an essential ingredient. When the content of K₂O is less than 1.5%, the meltbility of the glass and the speed of ion exchange reduce significantly, so the content is preferably above 2%. When the content of K₂O exceeds 6%, the weather resistance reduces and the speed of hardening becomes slower in a process of glass forming, so the content is preferably below 6%.

MgO is a network modifier oxide, can improve the meltbility of the glass, improve the speed of ion exchange, has a certain effect on improving the dielectric constant of the glass, and belongs to an essential ingredient. When the content of MgO is less than 6%, the meltbility reduces, so the content is preferably above 6%. When the content of MgO exceeds 11%, the speed of ion exchange decreases and the weather resistance reduces, so the content is preferably below 11%.

ZrO₂ is an ingredient to improve the speed of ion exchange, and at the same time, can increase the Vickers hardness of the surface after the glass is chemically strengthened, but it is not essential. When the content of ZrO₂ exceeds 2.0%, the effect of improving the speed of ion exchange is saturated and the meltbility deteriorates, so the content is preferably below 2%. When ZrO₂ is used, the content of ZrO₂ is generally above 0.3%, and it is preferably above 0.8%.

ZnO is a network intermediate oxide and advantageous for the meltbility of the glass at high temperature, and can improve the intrinsic strength of the glass and has a certain effect on improving the dielectric constant. When the content of ZnO exceeds 2.50%, a devitrification phenomenon may easily occur to the glass, so the content is preferably below 2%.

Li₂O is a network modifier oxide, has a significant effect on the meltbility of the glass, and has the effect of improving the dielectric constant of the glass. However, it has a negative effect on conventional ion exchange, easily resulting in stress relaxation, and making it difficult for the surface of the glass to be provided with a stable and uniform compressive stress layer. For this, generally, Na⁺ and Li⁺ exchange first, and then K⁺ and Na⁺ exchange. When the content of Li₂O exceeds 2.5%, the effect of ion exchange deteriorates and the tendency of crystallization of the glass increases, so it is preferably below 2.5%.

### Examples

The present application is described below in detail through specific **examples.** However, all these descriptions are not limiting and would not limit the present application. The scope of protection of the present application is limited by the claims.

**Examples** 1-5 are shown in Table 1 below. As described in Table 1, raw materials of the glass, SiO₂, Al₂O₃, Na₂O, K₂O, MgO, ZrO₂, ZnO, and Li₂O, were selected and weighed according to the constituent conditions of the oxide shown in the table in reference mol%, so that the sum of the molar percentage contents of the raw materials of the glass was 100 mol%. The raw materials were put into a platinum crucible after homogeneous mixing, melted in a lifting furnace with the temperature of 1500-1800°C for melting and clearing. Then, molten glass was poured into a mold of 150 × 70 × 20 mm which had been pre-heated to about 500°C, then transferred to an annealing furnace, kept at the temperature of 630°C for 30 minutes, and annealed at the speed of about 2°C/min, thereby obtaining a block of glass. The block of glass was cut and grinded to a specification, 100 × 50 × 0.7 mm, and finally, the two surfaces were polished into mirror surfaces, so that sheet glasses were obtained. The glasses were then heated to 180-400°C, followed by immersion in a nitrate solution for 4 hours at 420°C to perform first chemical strengthening treatment. For the conditions of second strengthening treatments, the glasses were heated to 250-400°C, the temperature and the time for the first strengthening treatment are 420°C/4 h respectively, and the temperature and the time for the second strengthening treatment are 400°C/20 min respectively.

**Table 1**

| Items | Sub-items | Example 1 | Example 2 | Example 3 | Example 4 | Example 5 |
|---|---|---|---|---|---|---|
| Chemical ingredients (mol%) | SiO₂ | 62.100 | 63.000 | 65.000 | 62.500 | 64.500 |
| | Al₂O₃ | 8.100 | 12.500 | 10.600 | 9.000 | 6.300 |
| | Na₂O | 15.000 | 11.000 | 10.700 | 10.700 | 13.200 |
| | K₂O | 6.000 | 4.000 | 5.200 | 5.800 | 4.800 |
| | MgO | 6.000 | 6.300 | 6.200 | 7.700 | 6.700 |
| | ZrO₂ | 0.800 | 1.200 | 0.500 | 1.000 | 1.600 |
| | ZnO | 2.000 | 0.000 | 0.800 | 2.500 | 1.500 |
| | Li₂O | 0.000 | 2.000 | 1.000 | 0.800 | 1.400 |
| | Total | 100% | 100% | 100% | 100% | 100% |
| Performance of strengthening | Compressive stress (briefly, CS) after first strengthening treatment (MPa) | 1030 | 780 | 830 | 845 | 650 |
| | Depth of layer (briefly, DOL) after first strengthening treatment (µm) | 21 | 45 | 38 | 32 | 16 |
| | CS after second strengthening treatments (MPa) | 1050 | 850 | 870 | 875 | 720 |
| | DOL after second strengthening treatments (µm) | 32 | 70 | 62 | 65 | 30 |
| Dielectric constant | | 8.95 | 8.30 | 8.0 | 8.43 | 8.80 |

**Comparison examples 1-3 are shown in Table 2.**

| Items | Sub-items | Comparison example 1 | Comparison example 2 | Comparison example 3 |
|---|---|---|---|---|
| Chemical ingredients (mol%) | SiO₂ | 66.000 | 58.400 | 65.700 |
| | Al₂O₃ | 13.200 | 5.900 | 4.200 |
| | Na₂O | 4.200 | 19.100 | 9.000 |
| | K₂O | 0.700 | 7.200 | 8.200 |
| | MgO | 11.600 | 3.600 | 5.400 |
| | ZrO₂ | 2.200 | 0.200 | 2.100 |
| | ZnO | 2.100 | 2.600 | 2.80 |
| | Li₂O | 0.000 | 3.000 | 2.600 |
| | Total | 100% | 100% | 100% |
| Performance of strengthening | CS after first strengthening treatment (MPa) | 530 | 721 | 653 |
| | DOL after first strengthening treatment (µm) | 40 | 18 | 8 |
| | CS after second strengthening treatments (MPa) | 575 | 760 | 704 |
| | DOL after second strengthening treatments (µm) | 51 | 25 | 15 |
| Dielectric constant | | 5.3 | 10.7 | 7.4 |

The above examples are merely preferred examples of the present invention, and are not limitation of the scope of protection of the present invention. Any changes made by the design principles of the present invention and without creative efforts in this basis should fall within the scope of protection of the present invention.

## Claims

1. A protective glass for a capacitive touch control system, having a dielectric constant of 8.0-9.8, preferably 8.0-9.0, at room temperature and at an operating frequency of 1 kHz.

2. A protective glass for a capacitive touch control system, comprising a compressive stress layer of a certain depth formed on the surface of the glass through chemical strengthening treatment.

3. The protective glass for a capacitive touch control system of claim 2, wherein through first chemical strengthening treatment, the surface of the glass obtains a compressive stress of 300-1100MPa, preferably 600-1100MPa, more preferably 650-1100MPa, and a depth of the compressive stress layer of 10-60µm, preferably 15-50µm, more preferably 20-45µm; and
through second or more chemical strengthening treatments, the surface of the glass obtains a superposed compressive stress of 300-1100MPa, preferably 650-1100MPa, and a depth of the compressive stress layer of 10-90µm, preferably 20-80µm.

4. The protective glass for a capacitive touch control system of claim 3, wherein the first chemical strengthening treatment is performed at the temperature of 380-500°C for 2-10 hours.

5. The protective glass for a capacitive touch control system of claim 3, wherein the second chemical strengthening treatment is performed at the temperature of 380-450°C for 10-100 minutes.

6. The protective glass for a capacitive touch control system of any of claims 1-5, with the chemical composition represented in molar percentage, comprising:
SiO₂: 60-65%
Al₂O₃: 6-13%
Na₂O: 10-16%
K₂O: 1.5-6.0%
MgO: 6-11%
ZrO₂: 0-2.0%
Li₂O: 0-2.5%
ZnO: 0-2.5%.

7. The protective glass for a capacitive touch control system of any of claims 1-6, wherein the surface waviness is 0.10-0.50µm, and is capable for physical thinning and chemical thinning or a combination thereof.

8. The protective glass for a capacitive touch control system of claim 7, wherein after physical thinning, the surface waviness is 0.05-0.50µm; after chemical thinning, the surface waviness is 0.10-0.80 µm, and there is a certain difference in surface waviness in the vertical direction.

9. The protective glass for a capacitive touch control system of any of claims 1-6, wherein the light transmittance reaches above 90% in the visible light wavelength range of 380-780nm.

10. The protective glass for a capacitive touch control system of any of claims 1-9, wherein the thickness of the glass is in the range of 0.2mm-2.0mm.
